# EUROPEAN PATENT APPLICATION

(11) **EP 4 796 918 A1**
(43) Date of publication of application: **26.08.2026**
(21) Application number: 26151276.8
(22) Date of filing: 12.01.2026
(51) Int. Cl.: G01N 21/64

(54) **TARGET DETECTION APPARATUS WITH IMPROVED DETECTION SENSITIVITY**

(30) Priority: 19.02.2025 KR 20250021475
(71) Applicant: GQT Korea Inc., Seoul 05854 (KR)
(72) Inventor: CHO, Seok Beom, 16876 Gyeonggi-do (KR); JUNG, Woongki, 05782 Seoul (KR); LEE, Seungah, 13138 Gyeonggi-do (KR); LEE, Seunghwan, 03720 Seoul (KR)
(74) Representative: Sander, Rolf

(57) **Abstract**

Disclosed is a target detection apparatus with improved detection sensitivity. The target detection apparatus includes a light source configured to emit excitation light for exciting the target; a first filter disposed behind the light source in a direction in which the excitation light is emitted from the light source; a detector configured to detect whether detection light emitted from the target is incident thereon; a dichroic mirror configured to direct incident excitation light toward the stage and direct incident detection light toward the detector; a second filter disposed behind the dichroic mirror on a traveling path of the detection light, the second filter filtering light in a wavelength band other than the detection light; and first and second blocking masks disposed at respective preset positions and configured to block a portion of light incident thereon.

## Description

### CROSS-REFERENCE TO RELATED APPLICATION

This application claims priority to Korean Patent Application No. 10-2025-0021475 filed on February 19, 2025, the entire contents of which are herein incorporated by reference.

This patent is based on research results carried out with the support of the Korea Technology and Information Promotion Agency for SMEs (TIPA), funded by the Government of the Republic of Korea (Ministry of SMEs and Startups) in 2014 (Project Unique No.: 2420015149; Subproject No.: RS-2024-00508795; Program Name: Start-up and Growth Technology Development Program; Project Title: Development of a Molecular Diagnostic Platform for Rapid Point-of-Care Testing (POCT) Based on Ultra-Sensitive Single-Photon Detectors).

### BACKGROUND

### 1. Technical Field

The present embodiment relates to a target detection apparatus having improved detection sensitivity in a process of detecting presence or absence of a target.

### 2. Related Art

Contents described in this section merely provide background information related to embodiments of the present disclosure, and are not intended to configure a related art.

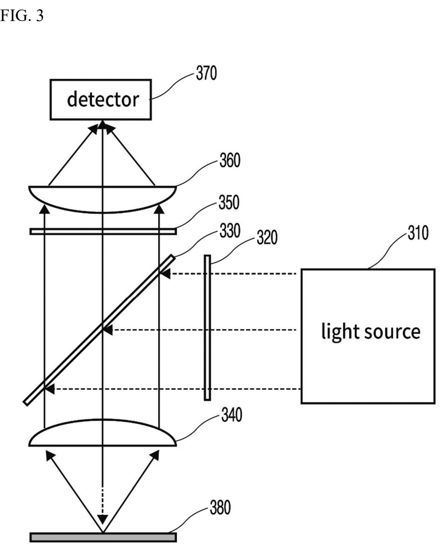

A target detection apparatus irradiates excitation light for exciting a target and detects light in a wavelength band emitted from the excited target to detect presence or absence of the target. A conventional target detection apparatus is implemented in the structure shown in FIG. 3.

FIG. 3 is a view illustrating a configuration of a conventional target detection apparatus.

Referring to FIG. 3, a light source (310) irradiates excitation light for exciting a target. The excitation light irradiated from the light source (310) passes through a filter (320) and proceeds to a dichroic mirror (330), and is reflected by the dichroic mirror (330). The excitation light reflected by the dichroic mirror (330) passes through a lens (340) and then proceeds to an inspection stage (380) for examining presence or absence of the target. When fluorescence (detection light) is generated at the inspection stage (380), the fluorescence (detection light) is incident on a detector (370) via the lens (340), the dichroic mirror (330), a filter (350), and a lens (360). Through this process, the target detection apparatus examines whether a target exists in a sample seated on the inspection stage (380).

However, the excitation light passes through various optical components until it is irradiated onto the target seated on the inspection stage (380), and fluorescence is randomly generated while passing through the optical components. Since components that generate fluorescence frequently exist in the optical components, fluorescence is generated regardless of the presence or absence of the target, thereby generating noise. Noise occurs in a random amount, direction, and position, and such noise generation is unavoidable. Accordingly, when noise is generated and incident on the detector, a problem arises in that the detector cannot distinguish whether detection light has been incident or noise has been incident.

Due to this problem, it is unavoidable that the signal-to-noise ratio (SNR) or signal-to-background ratio (SBR) of detection results of the conventional target detection apparatus is considerably low. When the amount of output excitation light is reduced in order to reduce the generation of noise, the intensity of the detection light (fluorescence component) itself becomes small, which may likewise adversely affect the detection result.

For this reason, the conventional target detection apparatus (detecting a target using a fluorescence component) has a problem in that detection sensitivity is considerably low.

### SUMMARY

An object of one embodiment of the present invention is to provide a target detection apparatus with improved detection sensitivity in detecting presence or absence of a target using excitation light.

According to one aspect of the present embodiment, provided is a target detection apparatus for examining presence or absence of a target in a sample seated on an inspection stage, the target detection apparatus comprising: a light source configured to irradiate excitation light for exciting the target; a first filter disposed behind the light source in a direction in which the excitation light is irradiated from the light source, the first filter being configured to filter light in a wavelength band other than that of the excitation light; a detector configured to detect whether detection light emitted from the target is incident thereon; a dichroic mirror configured to allow incident excitation light to proceed toward the inspection stage and allow incident detection light to proceed toward the detector; a second filter disposed behind the dichroic mirror on a traveling path of the detection light, the second filter being configured to filter light in a wavelength band other than that of the detection light; and first and second blocking masks disposed at preset positions, respectively, each configured to block a portion of light incident thereon.

According to one aspect of the present embodiment, the dichroic mirror is configured to determine whether to reflect or transmit light according to a wavelength band of light incident thereon.

According to one aspect of the present embodiment, the dichroic mirror is disposed such that a reflective surface faces the light source and the inspection stage.

According to one aspect of the present embodiment, the dichroic mirror is configured to reflect incident excitation light toward the inspection stage and transmit detection light emitted from the target.

According to one aspect of the present embodiment, the dichroic mirror is disposed such that a reflective surface faces the detector and the inspection stage.

According to one aspect of the present embodiment, the dichroic mirror is configured to transmit incident excitation light toward the inspection stage and reflect detection light emitted from the target.

According to one aspect of the present embodiment, the target detection apparatus further comprises an objective lens configured to focus excitation light that has passed through the dichroic mirror onto one area or one focal point of the inspection stage.

According to one aspect of the present embodiment, one or more second filters are disposed.

According to one aspect of the present embodiment, the first blocking mask is disposed between the light source and the dichroic mirror on a traveling path of the excitation light, and is configured to block travel of a portion of the irradiated excitation light.

According to one aspect of the present embodiment, the target detection apparatus further comprises an imaging lens configured to focus detection light that has passed through the dichroic mirror onto the detector.

According to one aspect of the present embodiment, the second blocking mask is disposed between the dichroic mirror and the detector on a traveling path of the detection light, and is configured to block travel of a portion of light incident thereon.

As described above, according to one aspect of the present embodiment, there is an advantage in that detection sensitivity is improved in detecting presence or absence of a target using excitation light.

### BRIEF DESCRIPTION OF THE DRAWINGS

FIG. 1 is a view illustrating a configuration of a target detection apparatus according to an embodiment of the present invention.
FIGS. 2A, 2B, 2C are views illustrating an example implementation of a blocking mask according to an embodiment of the present invention.
FIG. 3 is a view illustrating a configuration of a conventional target detection apparatus.
FIGS. 4A, 4B, 4C are graphs comparing fluorescence characteristics and SBR of a conventional target detection apparatus and a target detection apparatus according to an embodiment of the present invention.

### Detailed description

The present disclosure may be modified in various forms and may have various embodiments, and specific embodiments thereof are shown by way of example in the drawings and described in detail. However, it should be understood that the description is not intended to limit the present disclosure to the specific embodiments, but, on the contrary, the present disclosure is to cover all modifications, equivalents, and alternatives that fall within the spirit and scope of the present disclosure. Like reference numerals are used to designate like elements throughout the drawings.

Although the terms "first," "second,", "A", "B", etc. may be used herein in reference to various elements, such elements should not be construed as limited by these terms. These terms are only used to distinguish one element from another. For example, a first element could be termed a second element, and a second element could be termed a first element, without departing from the scope of the present invention. The term "and/or" includes any and all combinations of one or more of the associated listed items.

It should be understood that when an element is referred to as being "connected" or "coupled" to another element, it can be directly connected or coupled to the other element or intervening elements may be present. In contrast, when an element is referred to as being "directly connected" or "directly coupled" to another element, there is no intervening element.

Terms used in the present specification are used only to describe specific embodiments, and are not intended to limit the present disclosure. A singular form may include a plural form if there is no clearly opposite meaning in the context. In this specification, it should be understood that the term "include" or "have" indicates that a feature, a number, a step, an operation, a component, a part or the combination thereof described in the specification is present, but does not exclude a possibility of presence or addition of one or more other features, numbers, steps, operations, components, parts or combinations thereof, in advance.

Unless otherwise defined, all terms including technical and scientific terms used herein have the same meaning as commonly understood by those of ordinary skill in the art to which the present disclosure pertains.

It will be further understood that terms defined in commonly used dictionaries should be interpreted as having a meaning that is consistent with their meaning in the context of the related art and will not be interpreted in an idealized or overly formal sense unless expressly so defined herein.

The configurations, processes, steps, or methods according to embodiments of the present disclosure may be shared as long as they do not technically conflict with each other.

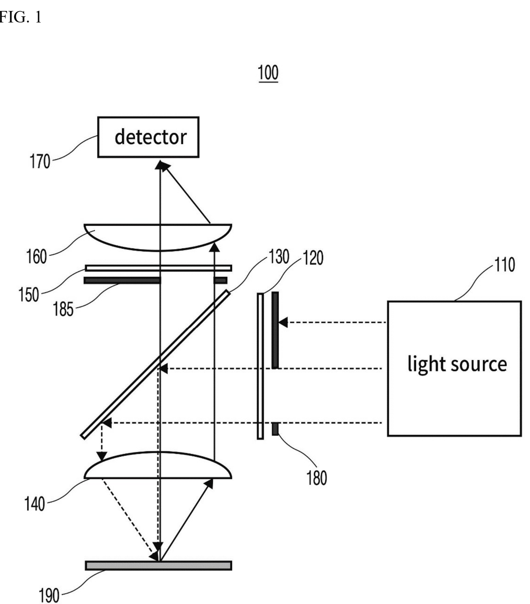

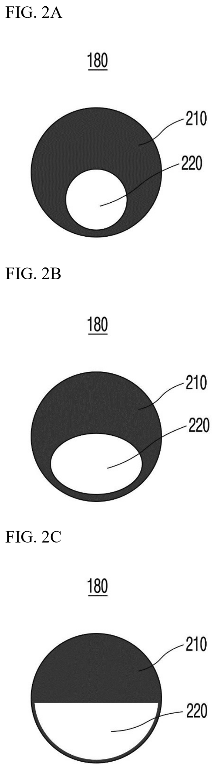

FIG. 1 is a view illustrating a configuration of a target detection apparatus according to an embodiment of the present invention, and FIGS. 2A, 2B, 2C are views illustrating an example implementation of a blocking mask according to an embodiment of the present invention.

Referring to FIGS. 1 and 2A-2C, a target detection apparatus (100) according to an embodiment of the present invention includes a light source (110), a first filter (120), a dichroic mirror (130), an objective lens (140), a second filter (150), an imaging lens (160), a detector (170), and blocking masks (180, 185).

The target detection apparatus (100) inspects the presence or absence of a target in a sample seated on a stage (190), and detects the target with detection sensitivity that is significantly improved compared to a conventional apparatus. The target detection apparatus (100) includes the blocking masks (180, 185) to minimize entry of noise into the detector (170) that may inevitably occur unintentionally, and also secures a target detection rate and detection sensitivity by implementing the detector (170) as an SPD (Single Photon Detector). Here, the target may be implemented as any material that emits detection light having a wavelength band different from that of excitation light upon receiving the excitation light, such as a gene.

The light source (110) emits excitation light for exciting the target toward the dichroic mirror (130). The light source (110) emits excitation light having a wavelength band determined according to the type of the target.

The first filter (120) is disposed behind the light source (110) in a direction in which the excitation light is emitted from the light source (110), and filters light in a wavelength band other than the excitation light. The first filter (120) filters stray light other than the excitation light among light incident on the dichroic mirror (130).

The dichroic mirror (130) directs excitation light incident thereto to the stage (190), and directs detection light emitted from the stage (190), more specifically from the target to be detected, to the detector (170). For example, as shown in FIG. 1, when the light source (110), the stage (190), and the detector (170) are arranged, the dichroic mirror (130) is disposed such that its reflective surface faces the light source (110) and the stage (190), thereby reflecting incident excitation light toward the stage (190) and transmitting detection light emitted from the stage (190), more specifically from the target to be detected. In contrast, when positions of the light source (110) and the detector (170) (and other associated components) are exchanged from the structure shown in FIG. 1, the dichroic mirror (130) is disposed such that its reflective surface faces the detector (170) and the stage (190), thereby transmitting incident excitation light toward the stage (190) and reflecting detection light emitted from the stage (190) toward the detector (170). The dichroic mirror (130) determines whether to reflect or transmit according to the wavelength band of light incident thereto. Accordingly, the dichroic mirror (130) directs light in the wavelength band of the excitation light to the stage (190) and directs light in the wavelength band of the detection light to the detector (170).

The objective lens (140) focuses the excitation light that has passed through the dichroic mirror (130) onto a predetermined area or a focal point of the stage (190). The objective lens (140) is disposed between the dichroic mirror (130) and the stage (190) on an optical path, and focuses excitation light incident thereto onto the stage (190), more specifically onto an area or focal point where the target seated on the stage (190) is located.

The second filter (150) is disposed behind the dichroic mirror (130) on a traveling path of the detection light and filters light in a wavelength band other than the detection light. Likewise, the second filter (150) filters stray light other than the detection light among light incident on the detector (170).

Although FIG. 1 illustrates that one second filter (150) is included in the target detection apparatus (100), the present invention is not limited thereto, and a plurality of second filters (150) may be arranged side-by-side at the above-described position. When a plurality of second filters (150) are provided, filtering performance of the target detection apparatus (100) may be further improved.

The imaging lens (160) focuses the detection light that has passed through the second filter (150) onto the detector (170).

The detector (170) detects whether detection light is incident thereon. In this case, the detector (170) may be implemented as an SPD (Single Photon Detector). Since the detector (170) is implemented as an SPD, it can detect detection light even when a relatively small amount of detection light is incident thereon.

The blocking masks (180, 185) are disposed at respective preset positions and block a portion of light incident thereon. The blocking masks (180, 185) are implemented in the form shown in FIGS. 2A-2C.

As shown in FIGS. 2A to 2C, each of the blocking masks (180, 185) includes a light blocking portion (210) and a light transmitting portion (220). The light transmitting portion (220) may be implemented in various shapes, but is implemented such that it does not occupy half or more of the total area of the blocking mask (180, 185). As shown in FIGS. 2A to 2C, the light transmitting portion (220) may be implemented in various shapes such as a circular shape, an elliptical shape, or a semicircular shape. However, since the light transmitting portion (220) is implemented so as not to occupy half or more of the total area of the blocking mask (180, 185), when the blocking masks are arranged side-by-side, the blocking masks are implemented such that even a part of the area of the light transmitting portions (220) does not overlap.

Referring again to FIG. 1, the blocking masks (180, 185) having the above-described structure are disposed at respective preset positions.

The blocking mask (180) is disposed between the light source (110) and the dichroic mirror (130) on a traveling path of the excitation light, and blocks a portion of the emitted excitation light. The light transmitting portion (220) of the blocking mask (180) is disposed such that, as the excitation light emitted from the light source (110) passes through the blocking mask (180), the excitation light enters the stage (190) through a portion of the dichroic mirror (130) and a portion of the objective lens (140).

Meanwhile, the blocking mask (185) is disposed at an arbitrary position between the dichroic mirror (130) and the detector (170) on a traveling path of the detection light (for example, between the dichroic mirror (130) and the second filter (150), or between the second filter (150) and the imaging lens (160)), and blocks a portion of light incident thereon. In this case, the light transmitting portion (220) of the blocking mask (185) is disposed only in a region that does not overlap, on the optical path of the detection light, with a region where the excitation light passes through the blocking mask (180) and enters the stage (190). Accordingly, the excitation light enters the stage (190) while passing through only a partial region of the first filter (120), the dichroic mirror (130), and the objective lens (140) via the blocking mask (180), and only detection light passing through the remaining region of the objective lens (140) and the dichroic mirror (130) passes through the blocking mask (185) and enters the detector (170).

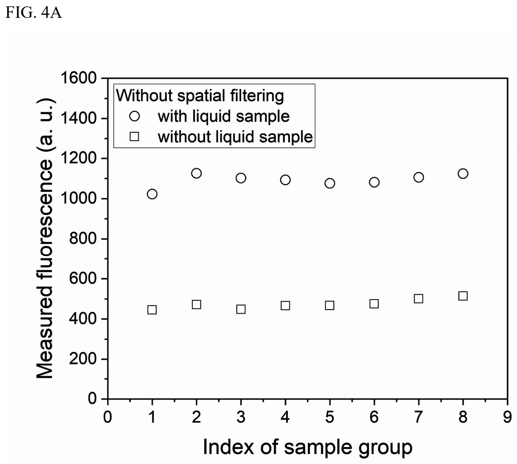

When the blocking masks (180, 185) are disposed, the following effects may be achieved. As described above, when the excitation light passes through the optical components (120 to 140), generation of noise light in the same wavelength band as the detection light at surfaces of the optical components, etc., is unavoidable. Accordingly, when the noise light enters the detector (170), noise increases. Since the blocking masks (180, 185) are disposed at the above-described positions and in the above-described directions, overlap regions between the excitation light and the detection light are eliminated or minimized. Because the excitation light is emitted along a path different from a path along which the detection light travels to the detector (170), even if the excitation light passes through the optical components (120 to 140), the likelihood that noise light generated therefrom enters the detector (170) along the same path as the detection light is significantly lowered by the blocking mask (185). Accordingly, substantially only detection light enters the detector (170). Although the amount of (detection) light entering the detector (170) decreases due to the blocking masks (180, 185), presence or absence of the target can still be fully detected by increasing sensitivity of the detector (170) or by increasing intensity of the excitation light (110). This can be confirmed in FIGS. 4A-4C.

FIGS. 4A-4C are graphs comparing fluorescence characteristics and SBR between a conventional target detection apparatus and the target detection apparatus according to an embodiment of the present invention.

FIG. 4A is a graph illustrating fluorescence characteristics of the conventional target detection apparatus. The conventional target detection apparatus detects a relatively large amount of detection light (when a liquid sample is present), but also detects a relatively large amount of noise light (when a liquid sample is not present). It can be confirmed that the detected amount of noise light is approximately about 45% of the detected amount of detection light.

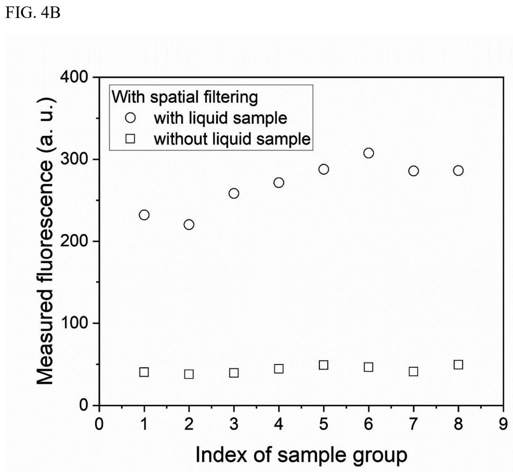

In contrast, FIG. 4B is a graph illustrating fluorescence characteristics of the target detection apparatus according to an embodiment of the present invention. The target detection apparatus (100) detects a relatively small amount of detection light, but detects a remarkably smaller amount of noise light compared thereto. It can be confirmed that the detected amount of noise light is approximately about 20% of the detected amount of detection light, which is reduced by more than half compared to the conventional apparatus.

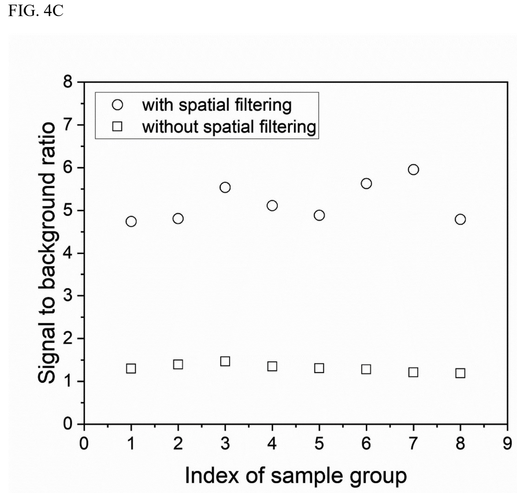

This can be clearly confirmed in FIG. 4C. FIG. 4C illustrates the SBR of the conventional target detection apparatus and the SBR (Signal to Background Ratio) of the target detection apparatus (100). It can be confirmed that the SBR of the target detection apparatus (100) is about four times or more superior to that of the conventional target detection apparatus. That is, as described above, by including the blocking masks (180, 185), the target detection apparatus (100) minimizes entry of noise light into the detector (170).

In addition, because the target detection apparatus (100) includes the blocking masks (180, 185), it can be implemented in a relatively small size. Conventionally, the beam path was adjusted using various optical components such as a collimator so that noise light does not enter the detector as much as possible. However, in such a case, relatively large optical components had to be disposed, making miniaturization of the target detection apparatus difficult. To address this, by including the blocking masks (180, 185), the target detection apparatus (100) may be miniaturized because it may not include optical components for adjusting beam width or beam path other than the above-described components (120 to 160).

The above description is merely an illustrative description of the technical spirit of the present disclosure, and those skilled in the art may change and modify the present disclosure in various ways without departing from the essential characteristic of the present disclosure. Accordingly, the embodiments described in the present disclosure should not be construed as limiting the technical spirit of the present disclosure, but should be construed as describing the technical spirit of the present disclosure. The technical spirit of the present disclosure is not restricted by the embodiments. The range of protection of the present disclosure should be construed based on the following claims, and all of technical spirits within an equivalent range to the claims should be construed as being included in the scope of rights of the present disclosure.

## Claims

1. A target detection apparatus for inspecting presence or absence of a target in a sample seated on a stage, the target detection apparatus comprising:
a light source configured to emit excitation light for exciting the target;
a first filter disposed behind the light source in a direction in which the excitation light is emitted from the light source, the first filter filtering light in a wavelength band other than the excitation light;
a detector configured to detect whether detection light emitted from the target is incident thereon;
a dichroic mirror configured to direct incident excitation light toward the stage and direct incident detection light toward the detector;
a second filter disposed behind the dichroic mirror on a traveling path of the detection light, the second filter filtering light in a wavelength band other than the detection light; and
first and second blocking masks disposed at respective preset positions and configured to block a portion of light incident thereon.

2. The target detection apparatus of claim 1, wherein the dichroic mirror is configured to determine whether to reflect or transmit according to a wavelength band of light incident thereto.

3. The target detection apparatus of claim 2, wherein the dichroic mirror is disposed such that a reflective surface thereof faces the light source and the stage.

4. The target detection apparatus of claim 3, wherein the dichroic mirror is configured to reflect incident excitation light toward the stage and transmit detection light emitted from the target.

5. The target detection apparatus of claim 2, wherein the dichroic mirror is disposed such that a reflective surface thereof faces the detector and the stage.

6. The target detection apparatus of claim 5, wherein the dichroic mirror is configured to transmit incident excitation light toward the stage and reflect detection light emitted from the target toward the detector.

7. The target detection apparatus of claim 1, further comprising an objective lens configured to focus the excitation light that has passed through the dichroic mirror onto a predetermined area or a focal point of the stage.

8. The target detection apparatus of claim 1, wherein the first blocking mask is disposed between the light source and the dichroic mirror on a traveling path of the excitation light, and is configured to block a portion of the emitted excitation light.

9. The target detection apparatus of claim 1, further comprising an imaging lens configured to focus detection light that has passed through the dichroic mirror onto the detector.

10. The target detection apparatus of claim 1, wherein the second blocking mask is disposed between the dichroic mirror and the detector on a traveling path of the detection light, and is configured to block a portion of light incident thereon.
